(19) Europäisches Patentamt

European Patent Office

Office européen des brevets

(11) Publication number: **0 119 396 B1**

# EUROPEAN PATENT SPECIFICATION

(45) Date of publication of patent specification: **27.03.91**  (51) Int. Cl.⁵: **G09G 1/00**, G06K 15/00, G06F 3/12

(21) Application number: **84100450.0**

(22) Date of filing: **17.01.84**

(54) Apparatus for and methods of presenting or displaying data represented as electric signals.

(30) Priority: **18.02.83 US 468021**

(43) Date of publication of application:
**26.09.84 Bulletin 84/39**

(45) Publication of the grant of the patent:
**27.03.91 Bulletin 91/13**

(84) Designated Contracting States:
**DE FR GB IT**

(56) References cited:
**US-A- 4 300 206**

(73) Proprietor: **International Business Machines Corporation**
**Old Orchard Road**
**Armonk, N.Y. 10504(US)**

(72) Inventor: **Bartlett, Geoffrey McSwain**
**43 Stonecrest Road**
**Ridgefield Connecticut 06877(US)**
Inventor: **Boulia, Dorothy Irene**
**10081 E 5th Street**
**Tucson Arizona 85748(US)**
Inventor: **Pring, Edward John**
**8260 E. Moonstone Drive**
**Tucson Arizona 85715(US)**

(74) Representative: **Johansson, Lars E.**
**IBM Svenska AB Intellectual Property Department 4-01**
**S-163 92 Stockholm(SE)**

## Description

U. s. Patent US-A- 4,031,519 shows a non-impact, laser-type printer with which the present invention may be advantageously employed as a document presentation device.

The present invention relates to computerized generation and storage of electronic fonts, such fonts are suitable for typesetting, printing, CRT display and other forms of document presentation. Fonts of all types play a key aesthetic role in typesetting and printing. A history of the relationship of the typographic art to font generation is set forth in the book "POCKET PAL, A GRAPHIC ARTS PRODUCTION HANDBOOK" by International Paper Company, 220 E. 42nd Street, New York, New York, copyrights 1963-1979. This book traces typesetting and font control from handset type through automated mechanical typesetters, photocomposers, impact composers, and electronic fonts used with non-impact or impact document presentation devices. At an early stage of the typographic art, it was recognized that computerization of the composer input could provide significant advantages and efficiencies. For example, many composers receive their input from a digital computer which represents the graphics to be printed in terms of electrical signals. Generally, the early computer-driven composers required the digital computers to use so-called "coded data" wherein each graphic was represented by a byte or two bytes of code permutations. The composing machine interpreted the coded data to generate graphics in a visual form.

Examples of early computerized input to printers and composition devices include the output writer for COBOL, TEXT-90 (used on the IBM 7090 data processing machine), as well as PRINTEXT 360 and 370 computer programs. These computer programs generally operated with either photocomposers or electronic font-type composers. In particular, PRINTEXT 370 (IBM programming RPQ EF3414, bearing program number 5799-ALR, as described in IBM publication SH20-1794), allows the program a lot of flexibility in defining a font. A font, for purposes of PRINTEXT 370, includes a set of graphic characters, a corresponding set of widths for the characters, and a table to indicate how to output characters for a composer or typesetting device. That is, a directory is provided which translates coded data representative of graphic characters to addresses usable by the typesetting device for addressing stored graphic patterns corresponding to the graphics to be printed. In some machines, such stored graphic patterns are in the form of an optical array or mask, either circular or rectangular, which is movable such that a beam of light can be directed through the optical mask or character onto a photosensitive surface. The character set of PRINTEXT 370 allows a font to contain up to 255 characters. Each number, from 1 to 255, identifying a graphic pattern or character is called a font recode number. PRINTEXT 370 provides input keyboard tables which translate the keyboard coded data into the font recode number. In this manner, the internal text processing of PRINTEXT 370 is independent of keyboard table restrictions. Such input translation is useful in a multilingual environment.

PRINTEXT 370 also introduced a so-called logical font, the font processed by PRINTEXT 370. Correspondingly, the output device has a physical font, i.e., the actual shape of the graphics to be printed in accordance with the PRINTEXT 370 logical font. All of the logical and physical fonts are defined in so-called font tables. Additionally, for text output, a plurality of printer graphics tables are provided for translating the font recode number into device symbols. Remember, each character in the font had a font recode number defined in the keyboard table. That recode number is used to access or address the graphic representation of the character on the printer display or typesetter.

Accordingly, PRINTEXT 370 provides device independent text processing through the use of input translating tables called keyboard tables and output translating tables called printer graphics tables. The font management, other than selection and identification of the graphics character, is handled in the printer or composition machine. In general, in a photocomposer a change of font would require a change of the optical mask. In those machines using a CRT (cathode ray tube) as an output printing device, the electronic fonts are loaded automatically through an IBM 1130 system or through an IBM 360 computer into the storage of a photo- composer. In essence, PRINTEXT 370 (and its predecessor programs) is a formatting program, which formats the document to be presented, selects the fonts but does not directly manage a font graphic pattern. Further, PRINTEXT 370 requires that each font and each graphic character be explicitly defined in the keyboard and printer graphics tables. This relationship is true even though symbols can be shared in a printer through a plurality of diverse keyboards by mixing keyboard tables and printer graphics tables.

A more flexible formatter is found in the computer program entitled "Document Composition Facility" (DCF), IBM licensed program number 5748-XX9 and described in IBM publication SH20-9161. This computer program introduced the concept of generalized markup language tags for improving the human factors of using a formatter program. Such tag markups are described in IBM publication SH20-9188 and in an article by W. B. Adams entitled "Playing Tag With Automated Text Processing", published in PROCEEDINGS OF THE INTERNATIONAL TECHNICAL COMMUNICATIONS CONFERENCE, held by the Society of Technical Communications, Pittsburgh, Pennsylvania in May 1981, on pp. A1-A7. The GML tag concept plus a to-be-described dual level control of font definition provided enhanced flexibility of DCF over the PRINTEXT 370 program.

DCF employs control words for handling the various text-related functions. In particular, in the font control and implementation area for a given text processing job, a plurality of fonts can be defined in either one of two methods with the implementation or actuation of the fonts occurring subsequent to the definition and somewhat independent of the timing of the definition. In particular, three control words are of interest. The first is the "define font" control word ".DF" which defines so-called internal fonts (internal to DCF) which may include underscoring, overstriking, capitalization, font changes on electronic font document presentation devices, and pause for impact element changes, such as for an electronic typewriter. This DCF control word will be detailed later. During the text processing by DCF, a "begin font" control word ".BF" initiates or actuates a font by specifying the font in which the subsequent text is to be formatted. Additionally, the begin font control word causes DCF to save the current font identification before beginning formatting with a new font. This operation enables a subsequent control word to easily regain the previous font for continued text processing. If a given font has been actuated by .BF is to be changed, a previous font control word ".PF" restores the most-recently used font and eliminates the last-actuated font. As an example, one can imagine composing text in lower case letters. If a phrase is to be underscored, then a begin font control word causes the underscored version of the font to be used. Upon completion of the underscoring, a previous font control word causes return to the lower case font and eliminates the underscored font. The same technique can, of course, be applied to italics and other forms of font changes.

Returning to the define font control word, that control word includes an identifier which must be used by the later expected begin font control word to activate the font that is being currently defined. In the define font control word is a font-ID which specifies the internal DCF identifier of the font being defined by the define font control word. Other parameters are added to the font-ID to specify underscoring, upper case, both upper case and underscoring, stopping an output device such as the typewriter, for enabling font changing as by changing the type ball or font disk in a photocomposer, overstriking control, repeat controls, identification of the character or graphic to be used in the overstriking, selection of a box character set for drawing lines and creating boxes, identifying an external font to be used and the name of such external font. In DCF, coded fonts may be specified by the host processor through a so-called character (CHARS) option of a formatting command as described in the referenced IBM publications. The receipt of a define font control word completely replaces any previously defined font using the same identifier. This replacement is necessary to provide data integrity.

The begin font control word which activates a defined font, specifies the font-ID which refers to the font identified through a define font control word. If there is no correspondingly defined font, then the begin font control word becomes a no-operation control word, i.e., the current font used in the formatting is maintained. This two-level control enables a plurality of fonts to be defined for a text processing job with each of the defined fonts being actuated or implemented on a selective basis.

The "previous font" control word merely resumes the use of the previous font that was saved by the immediately preceding begin font control word. If there is no previously saved font, then the current font will remain effective, i.e., the previous font control word becomes a no operation. In DCF, a font save stack could save sixteen different font identifications.

All of the above-described flexibility and control for text processing requires that an operator or user explicitly specify the font-ID or other name of the font as used in the define font control word. Therefore, each begin font control word has to rigorously correspond to the defined font, insofar as identification is concerned, otherwise, the control word is ignored. This means that all of the definitions require a list of the parameters and a memorization of those parameters by the user. While the two-tiered control word approach provides good control, yet better human factors and device independence is required, particularly with the advent of the flexible all-points-addressable printers and the extensive use of cathode ray tubes for document presentation. The above-described DCF program handles coded data for formatting a document to be presented. DCF did not manipulate the actual graphics patterns nor provide control of same except by identifying same.

Electronic fonts provide greater flexibility in document presentation, as will become apparent. An example of a printer using electronic fonts is the IBM 3800 printer. This printer receives graphic characters as electrical signals representing rectangular arrays or raster patterns of dots to be printed. Such electrically represented raster patterns replace the optical disks of the photocomposition machines. A brief description of the IBM 3800 printing subsystem and its support programming is found in IBM Publication GC26-3829 (December 1975). The 3800 receives electronic fonts in the form of raster patterns with an associated character arrangement table. The character arrangement table is a directory for converting the coded data, which represents graphics characters, into addresses for addressing the respective raster patterns stored in the 3800.

The support programming for the 3800, which resides and is used by the host processor to which the 3800 is attached, includes an IEBIMAGE program. This program allows modification of the character arrangement table including the directory portion referring to the raster patterns such that the character arrangement table can refer to various sets of raster patterns. For example, a first set of raster patterns is provided for usage in the United States, which includes 64 characters. When the 3800 is used in European countries, a so-called World Trade National Graphics provides graphic patterns for adapting the character sets to the various countries of Europe. IEBIMAGE can modify the character arrangement table to substitute certain graphic characters for graphic characters in the original set. The graphics character patterns are stored on direct access storage devices in a data area called SYS1.IMAGELIB. With this type of storage, to provide a font for printing in English, the original character arrangement table is referenced; for printing in German, a different character arrangement table is referenced which substitutes certain other national use graphics for some of the English graphics for avoiding storing complete fonts for the various languages or font modifications to be used with the 3800 printer. The character arrangement table is a directory in the same sense that the printer graphics table of the PRINTEXT 370 is a directory to graphic symbols.

Even with all of the above-described efficient controls for text, particularly font data, for composing printers, such as usually employed in data processing environments, a need for greater human factors in the formatting area still exists for more efficient use of editor's time and greater device independence of the programmed formatter such that changes in devices for document presentation are not reflected into the application programs which generate text and graphics to be presented. These factors become more negative as the number of available fonts increase; with "electronic fonts" the number of available fonts can increase dramatically. Accordingly, it is desired to more efficiently and easily accommodate a large number of fonts.

It is an object of the invention to enable selection of any one of a large plurality of type fonts for diverse document presentation devices using a simple selection process while enabling device and font independence of text processing input of non-formatted text data.

In accordance with the invention as claimed, a plurality of fonts are defined with the corresponding electrical representations stored for electronic access. Fonts are activated for a given document presentation by an internal command which specifies a plurality of possible fonts to be used in document presentation, the order of listing signifying a priority of selection. The defined and available fonts for the given document presentation are selected to match desired fonts with the particular documentation presentation such that the input data stream need not include to such specifics for making such data stream device and font independent. The combination of the defined and available fonts with the order of listing in the font activation provides a two-level selection control for relating text to a given data presentation device.

The foregoing and other objects, features, and advantages of the invention will be apparent from the following more particular description of preferred embodiments of the invention, as illustrated in the accompanying drawings.

Figure 1 illustrates a computerized document presentation system employing the present invention.

Figure 2 is a flowchart showing generation of a document using the Figure 1 illustrated system.

Figure 3 is a logical arrangement of a formatter in the system of Figure 1.

Figure 4 shows text arrangement in a page of a document formattable by the Figure 1 illustrated system.

Figure 5 illustrates a logic structure of font management usable with the Figure 1 illustrated system.

Figure 6 illustrates data structures used in the formatter of Figure 1 system for practicing the present invention.

Figure 7 illustrates the logic of control for font management in the formatter of Figure 1.

Figure 8 is a machine operations chart for controlling external font information in connection with the Figure 7 illustrated system.

Figure 9 illustrates machine operations for scanning a font index stored with the Figure 1 illustrated system.

Figure 10 shows building an external font information of Figure 6 as defined by the Figure 8 illustrated machine operation.

Figure 11 is a flowchart illustrating the machine operations of an output print control program of the Figure 1 illustrated system.

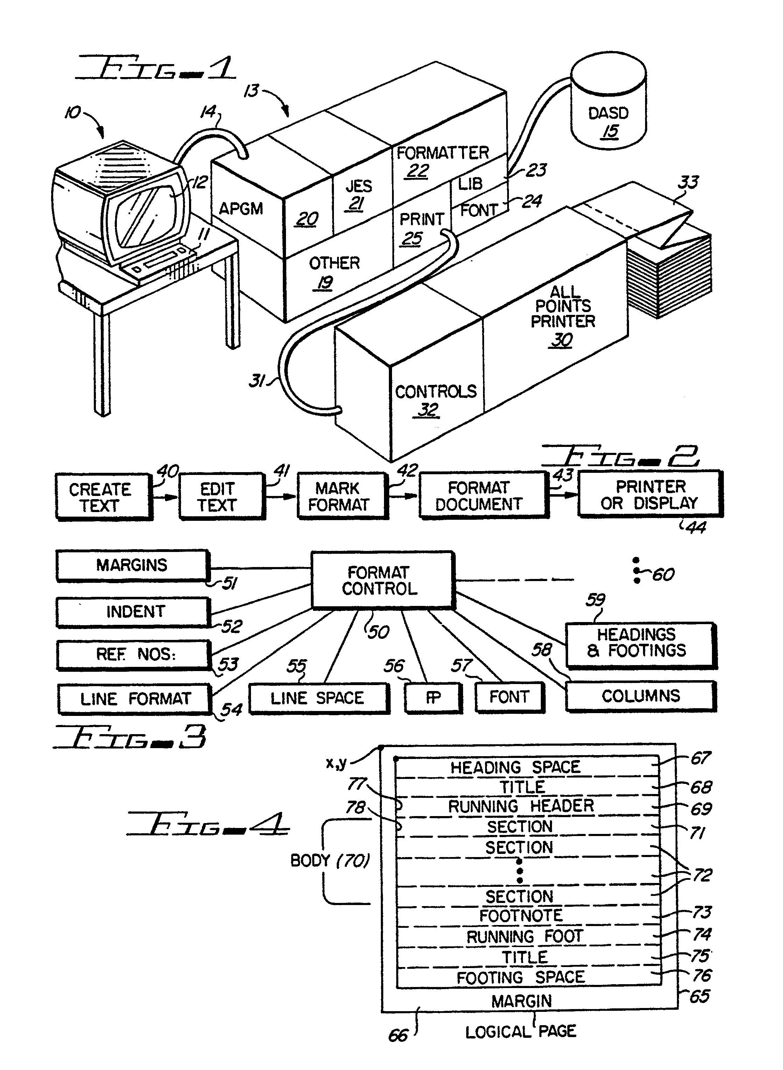

Referring now more particularly to the drawings, like numerals indicate like parts and structural features in the various diagrams. The general-operating environment in which the present invention preferably is practiced is shown in Figure 1. An operator-interactive terminal 10 has a keyboard and associated graphics display, such as CRT 12. The interactive terminal 10 is suitably cabled to a programmed digital computer 13 via cable 14. Cable 14 also diagrammatically represents any input/output multiplexing and channel controls, as are widely practiced in the data processing art. Computer 13 has its own data storage 15, preferably in the form of direct access storage devices, DASD. The hardware construction of computer 13 follows general purpose digital computer design, such as used by International Business Machines Corporation, Armonk, New York, in machines identified as the 3031, 3033, 3081 and 4300 series, for example. Figure 1 illustrates computer 13 in a logical form wherein each program of significance to practicing the present invention is shown as an internal block portion of the computer. APGM 20 is an application program associatable with interactive terminal 10. A typical APGM 20, when practicing the present invention, would be a text-editing program. Further, APGM 20 can be a payroll or other form of program which results in printout or display using formattable text and graphics, as will become apparent. A job-entry system, JES 21 interfaces with the usual data processor or computer operating system which is included in other programs 19. JES 21 assigns jobs to various programs in response to job control language (JCL) inputted through interactive terminal 10 or through other means, as is well known. When APGM 20 has completed its functions and it is desired to have a document composed and formatted, then JCL is entered into computer 13 activating JES 21 to initiate operation of text and graphics formatting by formatter 22. Formatter 22 can consist of a program such as the Document Composition Facility, IBM program no. 5748-XX9. The present invention provides certain enhancements over the formatting capabilities of the Document Composition Facility, Release 2, as described in IBM publication GH20-9158-2, entitled, "Document Composition Facility and Document Library Facility, General Information". A Document Library Facility, LIB 23, provides for accessing DASD 15 with respect to certain textual and control information usable by the Document Composition Facility or formatter 22. Since the formatter 22 is only concerned with formatting documents, a font program 24 (font 24), provides font information to formatter 22. Generally, formatter 22 will work with identification of fonts rather than the actual font symbols as represented by raster patterns or vector patterns, as stored in DASD 15. Formatter 22, upon completion of formatting a document including identification of fonts, either independently or via font 24, initiates print program 25. Print program 25, also termed an output writer, is designed to operate and supply textual and graphics data to an output printer, such as all-points-addressable printer 30. Printer 30 receives commands and data from computer 13 via input/output or peripheral cable 31. Cable 31 diagrammatically represents the input/output channels and attachment circuits usually found in coupling printer 30 to computer 13. An all-points-addressable printer is exemplified by the IBM 3800 printer, the IBM 6670 Information-Distributor and the like. Such a printer generally has a set of electronic circuit controls 32 for controlling the printer. The printer mechanism is preferably of the electrophotographic type, which is well known in the art. Such printers generally employ tractored paper, i.e., paper with tractor holes on one or both sides of the paper, such paper is usually fanfolded to produce a stack of printed output, as at 33. Typically, an all-points printer 30, if a high-speed printer, may have a burster-trimmer- stacker which automatically processes the printed document. Any type of fast or slow printer or other form of graphics presenting device may be advantageously employed with the present invention.

Figure 2 is a simplified flow diagram illustrating the general flow of document preparation. At 40, text is created. Typically, this can be through an interactive terminal 10 operating with an application program, such as program 20. Other forms of text can be automatically generated, such as by payroll programs, advertising analysis programs, computer simulation programs which simulate various physical and logical manifestations, and the like. At 41, the text is edited. Steps 40 and 41 can occur iteratively or sequentially. At 42, the edited text is marked for formatting such as by the GML (generalized mark-up language) employed with the Document Composition Facility. Such language is a tag-controlled format-marking with enhanced human factors. At 43, formatter 22 formats the document. Formatting a document can occur iteratively with marking a document. However, in the present environment, the formatting chores are taken from the operator for enabling the operator to perform other functions; formatter 22 has sufficient algorithmic controls to aesthetically format the proposed document. Some generalized mark-up (GML) commands tell formatter 22 how to format the document. The formatted electronically represented document is then supplied to a printer or display, as at 44.

Figure 3 is a simplified showing of a formatter 22. Generally, a formatter has a format control program 50 which synchronizes the operation and coordinates all of the formatting functions. Various specialized functions are performed by program modules within the formatter 22. For example, margins within a logical page, i.e., an area of a sheet of paper which is defined as a page, is controlled by margin control 51. Indenting paragraphs and inserts is controlled at 52. Addition of reference numerals is controlled by REF NOS 53. Line formatting, i.e., line spacing, hyphens, and so forth, is controlled separately at 54 and 55. Paragraphing controls are handled at 56. Font selection and management is handled at 57. Column justification and set-ups are handled at 58. Headings and footings are handled at 59.

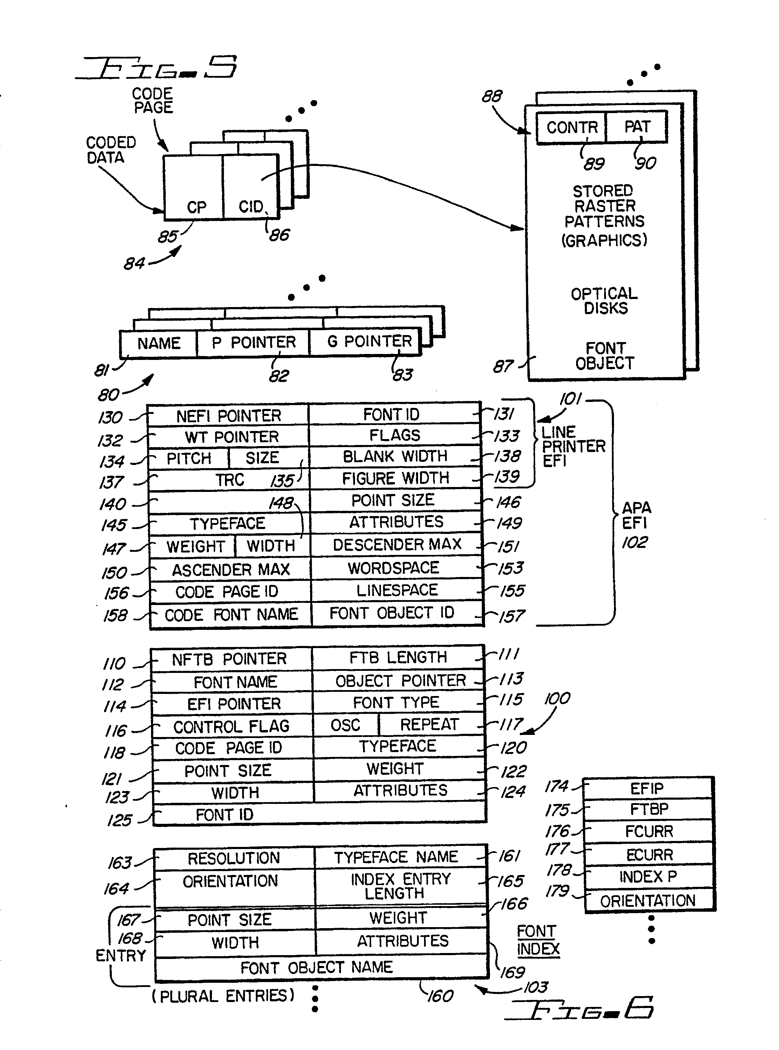

Other functions are indicated by ellipsis 60. All of these functions are designed to cooperate for defining text and graphics data within a logical page as shown in Figure 4.

Referring next to Figure 4, the structure of one type of logical page is illustrated. Logical page 65 is a defined portion of a document-presentation area, such as a sheet of paper or display screen. A logical page can be contiguous with, be one-half of, or any arbitrarily defined portion of a document presentation area. Generally, location of a logical page within a document presentation area is determined by X and Y (abscissa, ordinate) two-dimensional, rectangular-coordinate locations. Within each logical page, a margin 66 is interposed between the textual material to be described and the edge of the logical page. A heading space 67 occurs at the top of a text portion of a logical page. A title space 68 is then provided; when a page has no title, then the vertical depth of the title portion is zero. A running heading 69 occurs immediately below the title section. The next major section is the body 70 of the text. The body is arbitrarily divided into sections 71, 72. Immediately underneath body 70 is footnote space 73. Running footing 74 follows footnote 73. A foot title 75 is provided followed by the footing space 76. Items 67, 68, 75 and 76 are optional items. The size and orientation of a logical page is determined by programming not pertinent to an understanding of the present invention.

Figure 5 illustrates the font management arrangement for document presentation, each font will be preferably a coded font such as font 80. Each coded font includes a name 81, the name is a control symbol for identifying the coded-font data structure as a coded font. A P-pointer 82 points to a code page or directory 84 which correlates coded data with stored raster patterns. The stored raster patterns are indicated by G-pointer 83 which selects one of several font objects 87. In any system, there can be a large plurality of coded fonts 80. In accordance with the present invention, these coded fonts are constructed based either on explicit instructions or using implicit programmed analysis.

Each code page, of which there are several and which are independent entities, includes the code-point section (CP) 85 which contains a list of all code points or coded data patterns which are permitted to be used for referring to stored graphic patterns. For each entry in CP 85, there is a corresponding entry in character identification CID 86. CID 86 identifies the relative positions of the graphic patterns within a font object 87. For greatest flexibility, each CID 86 employs the same relative addressing, no limitation thereto intended. The font object 87 preferably stores stored raster patterns, i.e., binary ones and zeros, which represent the configuration of a graphic as a rectangular array of pels (print elements). Each print element is representable by a bit, the bit being 0 indicates background while the bit being 1 represents a portion of the graphic. Such font objects can be stored in DASD 15, optical disks magnetic tapes and the like. In addition to storing all of the graphics raster patterns, font object 87 includes control information 88. Control portion CONTR 89 includes that control information relating to the use of the characters or graphics represented within the font object. PAT 90 represents common pattern characteristics of the stored raster patterns. Such font objects can store alphanumeric characters, mathematical characters, graph-forming characters such as lines, corners, bars, etc., or any other form of graphics usable to represent information in a document. In any system, there can be a large number of font objects which are identifiable through the use of a plurality of G-pointers 83. The arrangement of Figure 5 allows each coded font to be handled in text processing as two pointers plus a name allowing the identified code page and font object to remain in storage until the document is ready to be presented.

There are three control words that a user at terminal 10 may employ to effect management of fonts using the structure of Figure 5 and practice the present invention. The first is ".DF" which is a define font control word similar to that employed in Document Composition Facility Release 2 but having added controls as later explained. A second control word is ".BF" which is a begin font control word similar to the begin font control word of the Document Composition Facility Release 2 but having greatly extended capabilities, as will be described. The third control word is ".PF" which is the same as employed for the Document Composition Facility Release 2 and a description thereof being dispensed with for that reason.

The define font control word defines an internal named font for use with the begin font control word. The internal font is linked to one or more externally defined font by define font control words, as will become apparent. This arrangement allows internal formatting functions, such as underscoring and capitalization, to be managed with the begin font and previous font control words. It also allows changing the font-IDs received from the host to be altered and also serves as a means of identifying fonts in a descriptive manner, a key part of the present invention. The define font control word structure includes a field called "font name" which specifies the identifier, used internally in formatter 22, of the font being defined by the present control word. After font name has been defined, the font name (a name internal to formatter 22) may be used with the begin font and other control words. In addition, .DF includes the font-ID received from the host as described for the Document Composition Facility. A type field describes the named font being defined in terms of several attributes. These attributes, in a preferred mode of practicing the name at 112 or an external font-ID (a coded font name) 125 is used.

The external font information EFI 102 is the data structure used to implement document presentation. An EFI can contain information for completing font definition of an incompletely defined font in an FTB. For example, a font referred to in an FTB can be defined only as "italic" with no other parameters being indicated. An implicitly-defined font results in an EFI 102 derived from an FTB 100 through later-described font definition methodologies. Returning now to the rigorously or completely defined font in an EFI, the EFIs are in a singly-linked list via NEFI pointer field 130. The external font-ID is stored at 131. The character width table is pointed to at 132. The width table indicates character widths of the font characters. Such character widths are essential for horizontal justification. Flags 133 contain indicators showing whether or not the font is proportionally spaced as well as other control factors, not pertinent to the present invention. Pitch 134 indicates the characters-per-inch of the defined font. Size 135 indicates the point size. Since an EFI can be used for typefaces, as well as other fonts not typefaces, the size field 135 is flexibly defined. TRC 137 is a control field usable with line-type printers and not pertinent to an understanding of the present invention. Blank width 138 indicates the horizontal spacing between adjacent words. Figure width 139 also indicates horizontal space usable with the present font. Numeral 140 indicates other fields including length- indicating fields may be included in EFI 102. Fields 130-140 constitute a portion 101 of the EFIs containing information required to define an EFI for a line printer. For an all-points-addressable printer, or other document presentation devices, the other fields 145, et seq., are included in EFI 102.

Typeface 145 contains the typeface name corresponding to field 120 of FTB 100. Point size 146 corresponds to point size 121 of FTB 100. Weight and width fields 147 and 148 correspond favorably to the weight and width fields 122 and 123 of FTB 100. Attributes 149 correspond to attributes 124. Ascender max 150 and descender max 151 indicates the maximum distance from the line base line (nominal vertical reference for a line of text) that will occur within the font. This information is useful for vertical justification. Orientation 152 indicates any one of four possible orientations of a font, i.e., portrait or landscape, as well as inverted portrait and inverted landscape. Wordspace 153 indicates the space between adjacent words in a horizontal line of text. Line space 155 indicates the vertical increment between lines. Note that in a line printer, the line spaces are predetermined by printer characteristics, in an APA printer, line spaces can be arbitrarily specified. Code page ID 156 corresponds to code page ID 118. Font object ID 157 indicates the identification of the font object 87. Coded font name 158 can be added for indicating the name of the coded font for the given EFI (fields 156 and 157 rigorously define information for a coded font).

Font index 103 relates typefaces, resolutions and orientations to a plurality of fonts within the typeface. A plurality of font indices 103 are grouped by the typeface family name. Each font index 103 includes the font name 160 corresponding to field 112 of FTB 100. Object name 162 identifies the font object 87 containing the raster patterns representative of the graphics within the named font. The usual addressing techniques based upon table lookup employing object names and physical memory addresses are employed to access the font object. Resolution 163 identifies the pel or print element density of the stored raster patterns. Orientation 164 indicates whether its portrait, landscape or inverted portrait, inverted landscape orientation. Even in all points addressable document presentation devices the resolution and orientation parameters are usually device dependent. Index length 165 indicates the size of the font index record. Size 167 indicates the vertical size corresponding to point size 121 of FTB 100. In a similar manner, weight 166 and width 168 correspond to weight 122 and width 123 of FTB 100. Attributes 169 indicate whether the font is Italic, compacted, Roman, whether the font is underscored, etc. Numeral 172 indicates that other entries may be employed in the font index. Font index 103 is preferably arranged by typeface name such that all fonts within a typeface are clustered in one area of memory. A one-pass address table lookup is employed for accessing the clustered font indices.

Figure 7 illustrates the machine operations or programmed logic flow for implementing the present invention within a formatter 22. It is to be appreciated that a formatter 22 performs many text-related functions of which the present invention relates to font management. The description of Figure 7 assumes that JES 21 has activated formatter 22, and that formatter 22 having a job dispatcher has accessed DASD 15 for obtaining the unformatted text which includes the usual control words as alluded to earlier. At 180 the dispatcher reads a control word (indicated by a period, such as in ".BF"). Upon recognition that a control word has been read, a usual program decoder is activated at 181 to parse and decode the received control word. The control word 182 is shown as being parsed into a plurality of sections. Section 183 contains the identification of the control word which is illustrated as ".BF". Following section 183, there are a plurality of parameter containing sections 184 and individually labeled as P1 through P5. A suitable character can be used to indicate the end of the control word as is commonly practiced in the programming art. Control word 182 is shown as being associated with the decoding step 181 by the dashed-line unnumbered arrow. When a define font control word ".DF" is decoded, the build FTB step 185 is activated. The build FTB step 185 takes the parameters included in the define font control word and stores them into a font table block 100 as indicated by dashed line arrow 186. The machine operations employed for building an FTB includes allocating a portion of data storage such as in main memory of a host 13 and then storing the appropriate parameters in the designated areas of the allocated spaces as indicated in Figure 6 for FTB 100. Since allocating memory space and transferring parameters from a received control word to build a table which reflects the contents of the received control word is well known, the detailed operations of the build FTB step 185 are dispensed with. Upon completion of building the next FTB which includes single-link chaining via NFTB pointer 110 the new FTB to all existing FTBs, host 13 at 187 then at 187 gets the next control word (get next) via the dispatcher (not shown). A plurality of define font control words may be received in a given sequence at the beginning of a text-processing job. The FTBs that are built condition the formatter 22 for activating the fonts to format the unexpected unformatted text in accordance with the designated output document presentation devices which allows the begin font control word to be device independent.

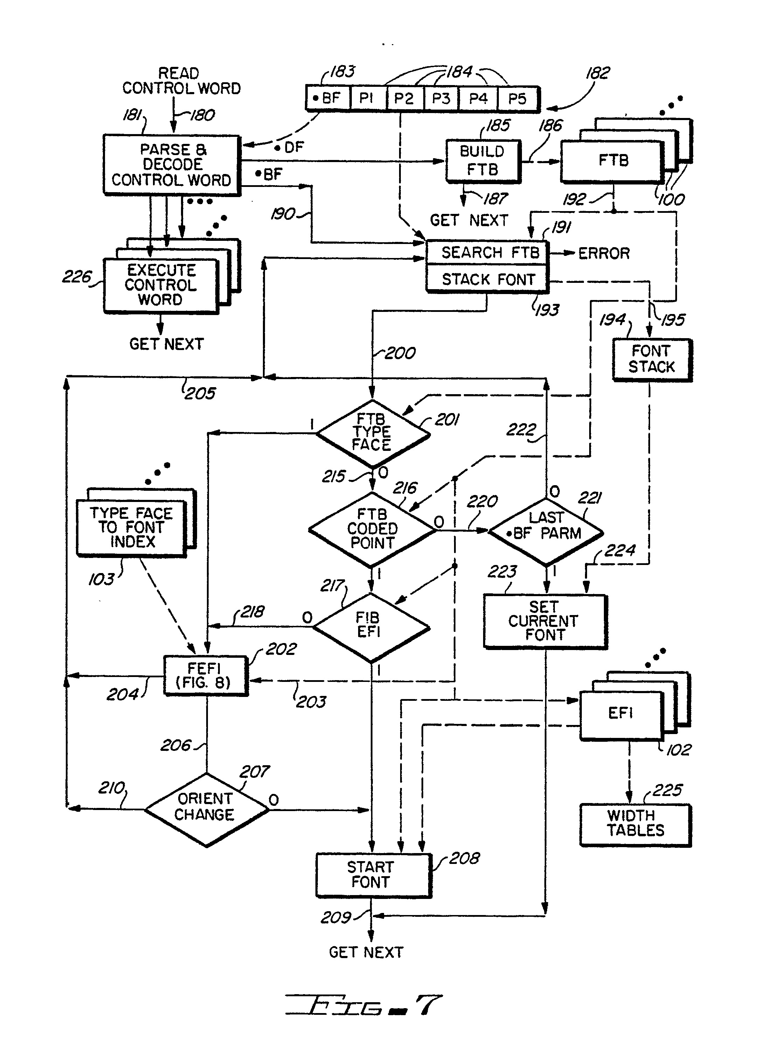

A received begin font control word causes the decode control 181 to follow logic path 190 to activate step 191 to search all existing FTBs 100. The search FTB step 191 takes the received parameters in the begin font control word and scans the FTBs 100 for identical parameters. Once a match is found, it is possible that an EFI 102 can be built. At this time, it is not guaranteed that an EFI can be built from a generic descriptor in a begin font control word. In any event, the current font is stacked by stack font step 193 in font stack 194 as indicated by dashed line arrow 195. Stack 194 is a LIFO stack of the usual type having a capability of storing 16 font identifications. Stack font 193 takes the current font, which is identified in register FCURR 176 of Figure 6 and which contains an address to the FTB of the current font and stores it at the top of font stack 194. Additionally, ECURR points to the current active EFI 102. That information is stored along with the contents of FCURR. Then the machine operations follow logic path 200 to determine whether or not a new font can be activated in response to the received begin font control word and whether or not the new font is to be explicitly or implicitly started. Any typeface in an FTB field 102 is identified in step 191, resulting from the search of FTBs 100 beginning with the FTB indicated by register FTBP 175 (Fig. 6), then typeface processing occurs in FEFI (find EFI) of Figure 8 as activated by step 202. FEFI receives inputs from the font indices 103 as indicated by dashed line 203 and from the identified FTB for determining all of the explicit parameters established through a previously executed define font control word. The current font which is now the top stack font in 194 may also be examined. It is possible that FEFI may not be able to build an EFI 102; that is, the first match between a begin font parameter and the found parameter in the FTB may not be suitable for the output document presentation device intended to present the document being formatted. That is, the top priority device was not selected by the user in the .BF control word. Accordingly, the next priority parameter is then examined. This is achieved by the formatter 22 following logic path 204 from FEFI of Fig. 8 and then path 205 to reinitiate FTB scanning step 191. Step 191 then determines if there are additional parameters in the .BF control word for searching the FTBs beginning again at the FTB identified by FTBP 175 of Figure 6. If no match is found, then the next parameter of the begin font control word is examined. If no parameter of the begin font control word is found, an error message can be supplied to an operator and the current font can be reestablished by moving the top entry of font stack 194 back into FCURR 176 and ECURR 177. As a result, the received begin font control word appears as a no operation command.

FEFI initiated at step 202 may in fact find or build an EFI 102. In that event, formatter 22 follows logic path 206 to branch step 207 to determine if there is an orientation change in the new EFI from the orientation identified in the received non-formatted text via an earlier control word (not shown) used to initially select text orientation and stored in register 179. This detection is achieved by comparing orientation field 164 of the index 103 entry corresponding to the new EFI with the initially selected orientation recorded in register 179. If there is no orientation change, then at 208 the font identified by the above-described procedure is started. This is achieved by putting entries in FCURR and ECURR 176, 177 as well as other miscellaneous housekeeping functions not pertinent to an understanding of the present invention. A begin font control word, cannot change orientation of the document presentation. This control requires the orientation selecting control words mentioned above and other CWs needed for orientation changes not pertinent to the understanding of the invention. In the event of an orientation change resulting from a begin font control word parameter, that begin font parameter must now be ignored with the next lower priority begin font parameter being examined. This is achieved by formatter 22 following logic path 210 to reinitiate search FTB step 191. With no orientation, the identified font is started for formatting operation at 208; the next control word is fetched (get next) as indicated by numeral 209.

When the identified FTB 100 does not contain a typeface entry, then formatter 22 from branch step 201 follows logic path 215 to step 216 to determine if the identified FTB 100 contains a coded font name in font name field 126 which identifies a coded font 80. If a coded font is identified, then at 217 the identified FTB 100 is examined at field 114 to see if there is an address of an EFI already established by a previous begin font control word. If that is the case, then a font has been explicitly and rigorously defined such that the font can be started at 208, as previously described. If there is no EFI pointer 114, then an EFI must be identified or built by FEFI as initiated by formatter 22 following logic path 218. Other machine operations are as described for a typeface-selected font.

If at 216 no coded font is indicated in the identified FTB 100, then formatter 22 follows logic path 220 to step 221. Here, formatter 22 determines whether or not the last begin font control word parameter has been examined. If not, a search FTB step 191 is reinitiated. It should be noted that step 222 could be omitted with the search FTB step 191 performing that function. This step is brought out to accent in the drawings that if all begin font parameters have been exhausted with no EFI being identified or built, then the current font is reestablished, as indicated at 223. The top entry of the font stack 194 is transferred as indicated by dashed line 224 to FCURR 176 and ECURR 177. Then at 209, the next control word is fetched.

As shown in Figure 7, each EFI 102 has a width table 225 appended to it. Such width tables are known in the art and are not described for that reason. Additionally, FEFI initiated at step 202 may have to implicitly build a font in either typeface processing or font-related processing. This relationship is indicated by the typeface font index 103 being coupled to the FEFI block 202 by the unnumbered dashed line arrow.

It is to be appreciated that formatter 22 executes a large number of control words as referenced in IBM publication SH20-9161, supra. Such actions are indicated collectively by numeral 226, such other functions are not pertinent to an understanding of the present invention and therefore dispensed with. The cycle of reading the control word, executing it and then getting the next control word, of course, is implemented for all control words such that formatter 22 responds to the sequence of control words, as previously described.

Figure 8 illustrates the machine operations used to find and build a new EFI 102. The machine operations are initiated by step 202 of Figure 7. Since FEFI can be instituted either for type or font processing which require different machine operations; at 230 the FTB 100 identified in step 191 of Figure 7 is examined to see if typeface field 120 (Fig. 6) has an entry. If it does not have an entry, then so-called font definition machine operations are performed based upon the coded font name entry 126. At 232, formatter 22 determines whether or not there is an EFI chain, that is, as processing gets started and no EFIs have been built. Formatter 22 examines field EFIP 174 of Figure 6, the pointer to the first EFI. If there is no EFI chain built, EFIP equals zero. Alternately the first data storage area pointed to by EFIP may have a special character, indicating no EFIs. Assuming that an EFI chain has been built, then at 233 formatter 22 scans the EFI chain for finding an EFI 102 having a coded font name in field 158 that matches the coded font name in field 126 of the FTB 100 identified at step 191. If the result of the scan, as examined at 234, finds an EFI has already been built, then the FTB identified by step 191 receives the EFI address into field 114. Since the EFI has been found, no EFI needs to be built; all font processing is complete. Accordingly, formatter 22 returns to the Figure 7 illustrated machine operations at 236.

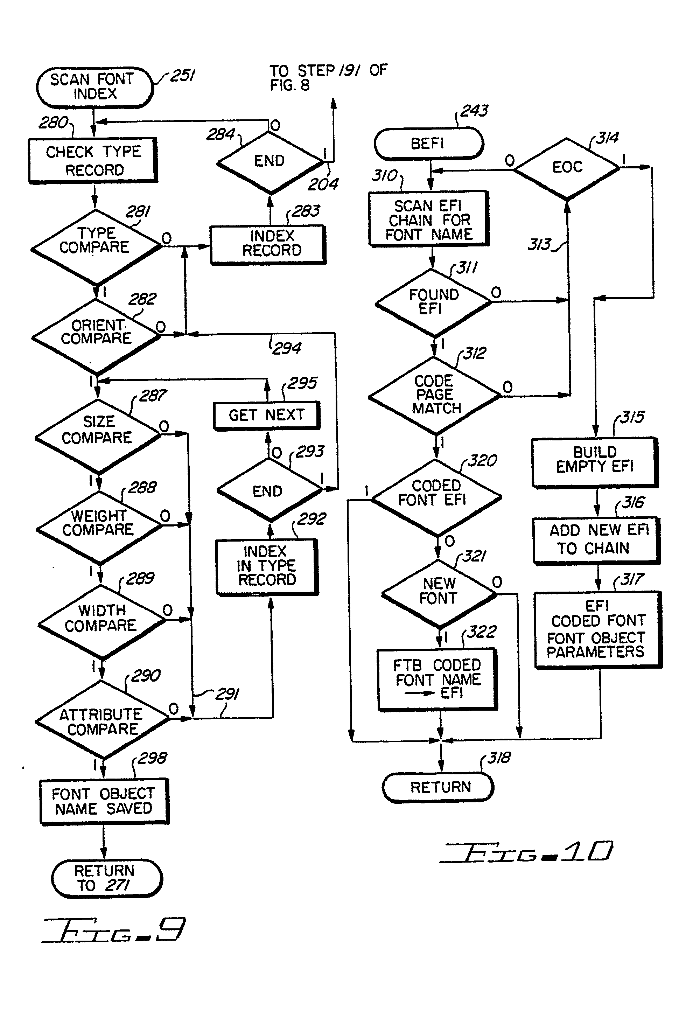

It may be that no EFI has been built for the desired font and no typeface has been named for font processing. From step 234 at 240, a coded font 80 is fetched from DASD 15 based upon the name of the coded font (step 230 indicated the font was named) and stored in main memory (not shown) of host 13. Then at 242, the identified coded font is read such that the P-pointer 82 and G-pointer 83 are available for building an EFI as initiated at step 243. Building an EFI is described later with respect to Figure 10. Accordingly, for font-defined processing, the font is always explicitly identified, i.e, the define font control word and the begin font control word contain parameters that explicitly and completely define a font to be used in formatting.

For typeface related font processing, formatter 22 in a series of steps selectively designated by numeral 250 determines whether or not the FTB identified in step 191 of Figure 7 contains certain parameters data necessary for fully defining a font. If not, the current parameters data are employed to implicitly complete the font definition. The first parameter is the name of the typeface; in other words, did the define font control word specify a new type face to be used? At 255, the identified FTB entry 120 is examined. If the FTB entry 120 is empty (no typeface specified), then at 256 the current typeface identified by the current EFI fields for entry 145 is selected. Remember the current EFI is identified in the first entry of stack 194. The next parameter to be analyzed is the point size. At 257, formatter 22 examines entry 146 of the identified FTB to see if a point size is specified. If not, the point size is selected to be the current size by entry 146 of the EFI corresponding to the last current font; otherwise the point size in entry 121 of the identified FTB is used. At 260, the orientation is made the current orientation identified in entry 152 of the current EFI identified as the top entry of stack 194 (.BF cannot change orientation). At 261, formatter 22 examines entry 123 of the identified FTB to determine if a width has been specified for the characters in the font. If not, a normal width is selected at 262. This indication is a part of the native descriptions 88 stored with the font patterns within the respective font objects 87. At 263 the identified FTB is again examined but in entry 122 to see if a weight of character is specified. If not, at 264, the weight is made medium. At 265, the attributes in section 124 of the FTB 100 will be used to build the EFI. It will be remembered that such attributes include italics, and the like. Following explicitly defining certain parameters data including defaulting to predetermined parameters as at steps 262 and 264, formatter 22 proceeds to implicitly define the font.

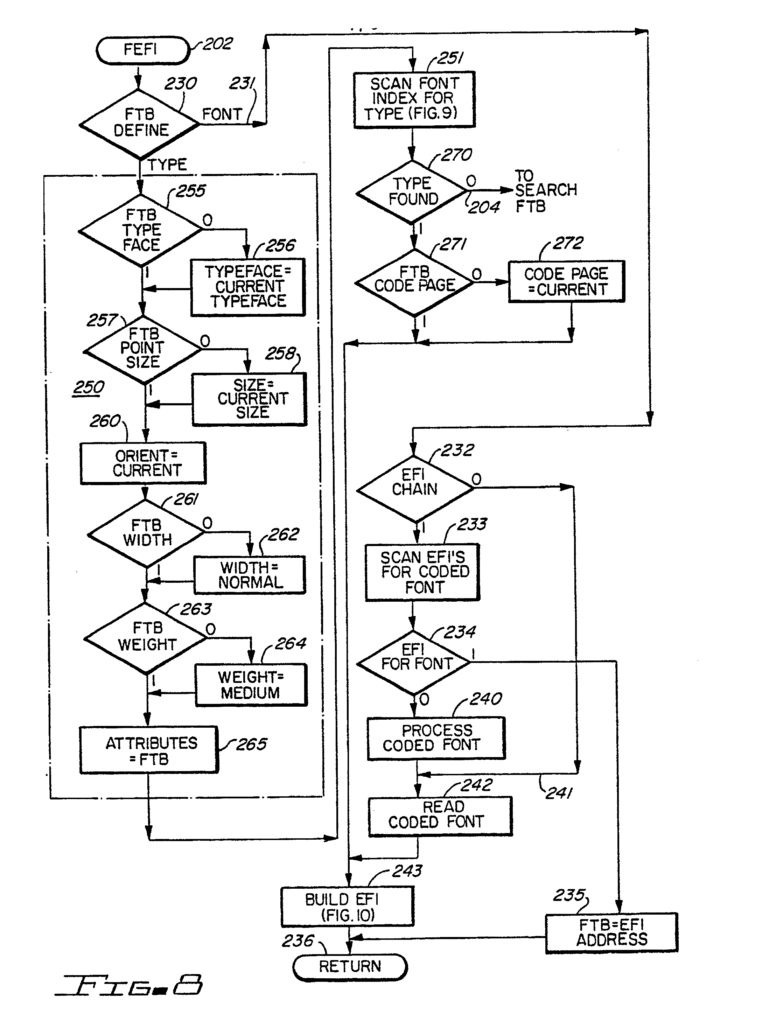

The next step in implicitly defining the font is to scan the font index for typefaces, as described in Figure 9 and as initiated by step 251 of Figure 8. Upon completion of the scan, formatter 22 at 270 determines whether or not the typeface was found. If there is no typeface listed in the index corresponding to the one indicated by the begin font parameter being evaluated, formatter 22 then follows logic path 204 returning to step 191 of Figure 7 to continue the search of FTBs 100 in accordance with the next available parameter in the begin font control word. If a suitable typeface is found, then at 271 the identified FTB has its entry 118 examined to determine whether or not a code page 84 (Fig. 5) has been identified. If not, at 272 the code page which is current is made the code page of the new EFI. This step is achieved by formatter 22 examining the current EFI entry 156 and transferring the contents to the EFI being built. Then the EFI is built as initiated at step 243, previously described. All of the parameter data accumulated in steps 250, 251 and 272 are stored in a work area (not shown) in the main memory (not shown) of host 13 and assigned to formatter 22 in a usual data processing manner. Such storage makes the parameter data available for the Fig. 10 illustrated machine operations.

The font index 103 scan procedure is detailed in Figure 9. Activation of the machine operation is at FEFI step 251 of Figure 8. Each record, such as shown in Figure 6 of the font index 103, is checked at 280 for typeface name in entry 161. At 281 the typeface identified in steps 255 and 256 of Figure 8 are compared with the typeface name in entry 161 (Fig. 6). If there is a favorable compare, then processing continues at step 282; otherwise, the search or scan will continue. The record address is indexed at 283 to get the next cluster of font indices by the next typeface name. When the record is indexed, whether or not all typeface names have been scanned and checked at 284, if all of the records have been scanned and no favorable compare has occurred, then the next begin font parameter will be examined by step 191 via logic path 204. If at 284 more typeface names can be scanned, the next record is checked at 280 and 281.

Assuming there is a suitable typeface, then at 282 formatter 22 compares the orientation of the current font as shown in field 152 of EFI 102 identified by the top entry in stack 194, i.e., the current orientation, with the orientation in field 164 of the typeface identified in font index 103 (Fig. 6). If there is a non-compare, i.e., a change in orientation which is not permitted through a begin font control word, the record is indexed at 283 and the search for an appropriate font is continued. It should be noted that the record indexing at 283 after a typeface name has been identified in step 281, is a scan of the records of the fonts within a typeface family cluster and an orientation non-compare is equivalent to a typeface non-compare. When proper orientation and a typeface name has been identified, then a subsequent scan of records within the typeface name is achieved in steps 287 through 295. Steps 287 through 290 are compare steps for comparing various graphics parameter data for ensuring that the identified font is the one desired. At 287 the size (point size) is compared. This is achieved by comparing the size field 167 data contents of the font index 103 with point size field 121 data contents of the identified FTB 100. After a compare, the next parameter data are compared at 288. The weight field 166 of the font index is compared with the weight field 122 of the identified FTB 100. For a favorable compare the next parameter data is compared at 289 for ensuring an appropriate width indication. The contents of width field 168 of font index 103 are compared with the data contents of the width field 123 of FTB 100. Assuming a good compare, the next parameter data being compared are the attributes at step 290. Attributes field 124 of the identified FTB 100 are compared with the attributes field 169 of font index 103. If any of the compare steps 287-290 result in a non-compare, then the next record has to be obtained. To obtain the next record in a family cluster of records, formatter 22 follows logic path 291 to index the typeface record address at 292. The end of the records is checked at 293. If all parameters data in all of the records within the typeface name have been checked at 293 and there is no compare, then formatter follows path 294 to index to the next family of records at 283. Otherwise, the next record is obtained at 295 with steps 287-290 being repeated until a four-way compare is obtained or end of the records is reached. Upon achieving such a compare, the font object name (FONT NAME) contained in field 160 of font index 103 record is saved in the work area (not shown) at 298 for building an EFI beginning at step 243 (Fig. 8) as described in Figure 10 and for storing the font object names in field 157 of the EFI 102 that will be built. The Fig. 9 illustration shows how steps 251 and 270 of Fig. 8 are performed in a best mode.

Formatter 22 builds the external font information (EFI) 102 as detailed in Figure 10. Activation of these machine operations occurs at step 243 of Figure 8. First of all, at 310 formatter 22 scans the EFI chain beginning with the EFI pointed to by EFIP 174 (Fig. 6) and continuing on using the NEFI pointers 130 in the respective EFIs. If the font name 160 of font index 103 that was identified in the Figure 9 illustrated machine operations corresponds with the font name 158 of the EFI currently being examined, then further analysis of that EFI proceeds. Otherwise, the scan continues to find a suitable EFI by formatter 22 following logic path 313 to check and branch step 314. At 314 formatter 22 checks for the end of the EFI chain (EOC). If the end of the chain is reached, this means there is no EFI corresponding to the just-defined font.

Assuming that the font names compared equal at step 311, then at 312 formatter 22 compares the code page identified in the current EFI 102 field 156 with the code page entry at 118 of the EFI 102 identified at step 191. For a non-compare, formatter 22 follows logic path 313 as previously described. For a favorable compare both in steps 311 and 312, such that the font names and the code pages match; then at 320, the coded font name 126 is checked. If there is a favorable coded font name compare (the "1" exit of step 320 is taken), then return is taken at 318 to the Figure 8 illustrated machine operations. Without a coded font compare at 321, formatter 22 determines whether or not a font was defined in the EFI. If not (a new font is needed) at 322 the coded font name of entry 126 of the identified FTB 100 is loaded into the EFI being scanned, i.e., the EFI identified in scan 310. Then formatter 22 returns to the Figure 8 illustrated machine operations.

In the event the EFI scan results in identifying no suitable EFI 102 (EOC = 1 at 314) , then a new EFI has to be built by formatter 22.

Building begins at step 315 by allocating memory space within the memory of host 13 sufficient to receive the parameter data and other control data shown in Figure 6 for EFI 102. At 316 that memory space is added to the chain by identifying new EFI area in the NEFI pointer area 130 of the previous last EFI of the chain. The NEFI pointer 130 of the newly built EFI will contain either all zeros or a control code indicating end of chain to be used in a later step 314 for a subsequently build EFI. At 317 the parameter data and other control data are loaded into the allocated memory area using known data-transfer techniques. Remember the data was gathered in the Figure 8 illustrated machine operations and stored in the work area. Contents of that work area are merely transferred to the new EFI area. Then formatter 22 having completed the EFI, returns to the Figure 7 illustrated font processing.

Not described herein, for purposes of brevity, is how the control characters and font names are transferred into the text stream. Such techniques are known in the art such as practiced in the above-referenced Document Composition Facility and will not be repeated here for that reason. That is, insertion of control characters in all types in the text streams is a notoriously well-known procedure.

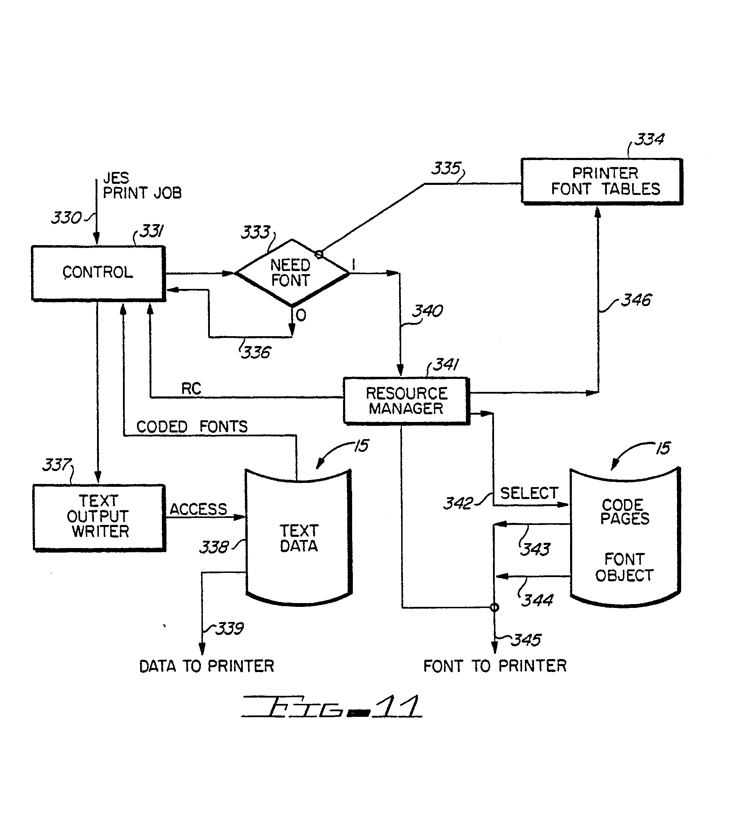

When formatter 22 has completed building a text stream with the appropriate format control characters including the above-described font identifications in the form of coded fonts, those formatted data are stored in DASD 15 as a spooled data set awaiting document presenting operations. When a printing operation can ensue, JES 21 activates an output writer or print program 25 for transferring the spooled text data. First, the fonts are transferred to printer 30, the text data follows for the printing operation. A simplified showing of an output writer functioning in accordance with the present invention using coded fonts which are either implicitly or explicitly defined is shown in Figure 11. Activation of print program 25 is represented in Figure 11 at 330. Output writers such as print program 25 include a control portion 331 which parses and decodes the received print instructions and control words of the text stream to be printed. The define font control word results in identification of font information at the beginning of the text stream. Such font information is analyzed by control 331 at step 333. Print program 25 keeps a printer font table 334 which represents all of the fonts currently available within printer 30 attached to host 13. At step 333, all of the coded fonts 80 identified in the formatted text data stream are compared with the coded fonts identified in the printer function tables 334. Such comparison is represented by line 335 extending to step 333. If no fonts are needed, then print program 25 follows logic path 336 back to control 331. Then, control 331 activates a text output writer 337 which, in fact, transfers the spooled text from DASD 15 into control 32 of printer 30 for printing, as is well known. On the other hand, if a font is needed at 333, then print program 25 follows logic path 340 to a resource manager 341. Resource manager 341 maintains the resource tables including printer font tables 334. The "need font" indication includes the name of the coded font and the pointers 82, 83 (Fig. 5). Resource manager 341 has address tables which allow the appropriate code pages and font objects to be selected as represented by select arrow 342. Such addressing techniques are well known and not further elaborated upon. In any event, the selected code pages and font objects corresponding to the coded fonts are then transferred respectively over logic paths 343, 344 and then 345 to the printer 25. During this font loading, printer 25 in most instances cannot receive text or perform any printing operations. That is, transferring the font to a printer is an operation preparatory to the printing function. After successfully transferring the code pages and font objects to the printer, resource manager 341 supplies a return code RC to control 331 telling the control that printing may ensue. It is parenthetically noted here that the code page 84 of Figure 5 may be altered by resource manager 341 to accommodate the addressing characteristics of the font storage (not shown) within printer 25.

It may also occur that the coded fonts may be embedded in the text data as stored at 338 in DASD 15. Accordingly, the text output writer 337 accesses the text data 338 for transmission to the printer 25 over path 339. In the event a coded font is embedded, then that fact along with the identification of the coded font is sent to the control 331. Control 331 then at that time determines whether a font is needed for the ensuing text. If so, printing operations are momentarily interrupted such that resource manager 341 can supply the appropriate code pages with associated font objects of the coded fonts to the printer. Upon completion of updating the font storage of the printer, printing operations resume. Resource manager 341 after transferring each font to the printer 25 correspondingly updates the printer-font table 344 to ensure its currency with the actual printer 25 operational status.

## Claims

1. A machine-implemented method of coupling a non-formatted text data stream to a document presentation device wherein said document presentation device stores electrical representations of fonts to be used in presenting a document represented by said text data stream, including the steps of:

   defining in said coupling a plurality of fonts including fonts that are unique to a one of said document presentation devices, each of said definitions being addressable by a given name;

   receiving a text data stream having embedded font activation signals which specify a plurality of fonts in a predetermined order (font specifications);

   scanning said plurality of font specifications in said received text data stream in a given order and comparing each of said scanned specifications with said defined fonts in the order of scanning; and

   selecting the first one of said specified fonts that compares with any one of said defined fonts as a font to be used in the presentation of the received text data stream.

2. A machine-implemented method set forth in claim 1 wherein said received text data stream has a plurality of said font activation signals in spaced-apart locations therein such that text data following the respective activation signals are presented with the font selected in accordance with the steps of claim 1 and further selecting said defined fonts for a given document presentation device to be used and for each subsequent document presentation selecting the font definitions for the document presentation devices without altering said activation signals.

3. A machine-implemented method set forth in claim 1 wherein said method is practiced in a programmed digital computer, said computer having a data storage facility for storing said electrical representations of said fonts in an addressable manner, further including the steps of:

selecting for said font definitions an internal address name and in the definition including identifications of fonts for enabling accessing said stored fonts;

in said comparing step, taking from said activation signal said internal address names and comparing same with the internal address names in said definition whereby one internal address name can be employed to specify any number of stored fonts for successive document presentations without altering said font activation signals.

4. A document preparation system having a programmed digital computer adapted to receive and process received text data signals representing non-formatted data but including format and composition indicating signals having font definition and font activation signals;

said computer having a data storage facility for storing electrical representations of fonts to be used in any one of a number of document presentations and each font being addressable via an external font name;

said computer also including data storage space for storing program indicia and said received indicating signals which enable said computer to receive and process received text data signals; means for receiving said font definition and activation signals each capable of including a plurality of font-identifying parameter and font name signals;

first program means in said program indicia for enabling said computer to respond to said font definition signals embedded in said received text data stream for storing in said data storage space an internal font name linked to an external font name wherein said external font name enables said computer to access predetermined ones of said font electrical representations stored in said data storage facility via said received font definition signals;

second program means in said program indicia for enabling said computer to respond to said font activation signals embedded in said received text data stream for scanning a list of said font-identifying signals included in said received font activation signals;

third program means in said program indicia for enabling said computer to compare said font-identifying signals scanned by said second program means in an order of scanning corresponding to the order of storage of said font definition signals stored in said data storage space and upon a favorable comparison, stopping the scanning; and

fourth program means in said program indicia for enabling said computer to select the external font identification linked to said internal font resulting in said favorable comparison for selecting the stored electrical representations corresponding to said selected external font for presenting text represented by text data following said font activation signal scanned by said second program means.

5. The document preparation system set forth in claim 4 further including scan control program means stored in said data storage space enabling said programmed digital computer to activate first said second program means to scan said stored font definition signals;

means for receiving with each of said font definition signals, font-relating signals which respectively indicate predetermined font characteristics or names; and

upon a comparison by said fourth program means of a given one of said font definition signals, activating said third programs means for enabling said programmed digital computer to scan said font-related signals in said given font definition signals for a comparison of said received front activation signal with any of said font-related signals in said font definition signal and upon a favorable comparison between any one of said font-related signals in said given font definition signals stop the scanning for enabling said programmed digital computer to use said fourth program means for selecting a font in accordance with said compared font-related signal, otherwise continue said scanning of said stored font definition signals using said third program means.

6. A machine-implemented method of selecting electronic fonts to be used in connection with preparing a set of text and graphic signals for visual presentation requiring character graphics;

including the automatically executable steps of:

defining a hierarchy of electronic fonts usable to visually present text and graphics corresponding to received sets of text and graphic signals, said hierarchy of electronic fonts including a list of font sets, each font set having predetermined characteristics and attributes;

electronically storing a plurality of said electronic font sets some of which will correspond to said defined electronic fonts;

receiving a set of text and graphic signals including identifications of fonts to be used in presenting the text and graphics represented by said received signals; and

comparing said received identifications with said defined electronic fonts including scanning said hierarchy and selecting a first defined font in said hierarchy that corresponds to a first one of said received font identifications as the electronic font to be used in presenting ensuing text and graphics.

7. A machine-implemented method as set forth in claim 6 including receiving a single one of said font definitions for a given set of text and graphic signals, including a plurality of font names in said single one font definition and listing the font names in a given order;

receiving a font identification signal indicating said single one font identification; and

after said comparing step of claim 6, scanning said listing in said given order and comparing said listing font names with corresponding font names of said stored electronic font sets and selecting a first one of said corresponding font names that compares favorably with said listing font names as the font set to be used with ensuing text and graphic signals.

8. A machine-implemented method as set forth in claim 6 including receiving a plurality of said font definitions for a given set of text and graphic signals, each received font definition including at least one font name and predetermined font-related identification signals, storing said received font definitions in a predetermined order of listing;

receiving a font identifications signal for identifying a font to be used with ensuing text and graphic signals, the received font identification signal including a font-related identification signal; and

comparing said received font-related identification signal in sequence of said predetermined order of listing with said received font definitions and selecting the font name of a first font definition in said listing having a font-related identification signal corresponding to the font-related identification signal received with said font identification signal.

9. A machine-implemented method as set forth in claim 6 wherein a plurality of diverse document presentation devices are capable of receiving and presenting said text and graphic signals in accordance with corresponding diverse ones of said selected fonts;

further including defining said electronic fonts in accordance with said corresponding diverse ones of said selected fonts and storing only those fonts which are said corresponding diverse ones of said selected fonts such that the formatting and selecting of fonts is dependent on which of said diverse document presentation devices are to receive said text and graphic signals whereby the composition of the text and graphic signals tends to be independent of the presentation devices.

10. A machine-implemented method as set forth in claim 9 wherein a one of said received identifications includes a plurality of identifications of said corresponding diverse ones of said selected fonts such that a single received identification enables selection of any one of a plurality of said corresponding diverse ones of said selected fonts.

## Revendications

1. Méthode mise en oeuvre par machine pour le couplage d'un flux de données de texte non formatées à un dispositif de présentation de document, dans laquelle ledit dispositif de présentation de document stocke des représentations électriques de polices à utiliser dans la présentation d'un document représenté par ledit flux de données de texte, comprenant les opérations de :

définition dans ledit couplage d'une pluralité de polices comprenant les polices qui sont spécifiques à l'un desdits dispositifs de présentation de document, chacune de ces définitions étant adressable par un nom particulier ;

réception d'un flux de données de texte dans lequel sont incorporés des signaux d'activation de police qui spécifient une pluralité de polices dans un ordre prédéterminé (spécifications de police) ;

détection de cette pluralité de spécifications de police dans ledit flux de données de texte reçues, dans un ordre donné, et comparaison de chacune desdites spécifications détectées avec lesdites polices définies, dans l'ordre de détection ; et

sélection de la première desdites polices spécifiées qui concorde avec l'une quelconque desdites polices définies, comme police à utiliser dans la présentation du flux de données de texte reçues.

2. Méthode mise en oeuvre par machine suivant la revendication 1, dans laquelle ledit flux de données de texte reçues comporte une pluralité de dits signaux d'activation de police à des emplacements mutuellement espacés, de sorte que les données de texte qui suivent les signaux d'activation respectifs sont présentées avec la police choisie conformément aux opérations de la revendication 1, et elle comprend en outre la sé lection desdites polices définies pour un dispositif de présentation de document particulier à utiliser et, pour chaque présentation de document subséquente, la sélection des définitions de police pour les dispositifs de présentation de document sans modification desdits signaux d'activation.

3. Méthode mise en oeuvre par machine suivant la revendication 1, dans laquelle ladite méthode est mise en oeuvre dans un ordinateur numérique programmé, ledit ordinateur comportant des moyens de mémoire de données pour stocker lesdites représentations électriques desdites polices d'une manière adressable, comprenant en outre les opérations de :

sélection, pour lesdites définitions de police, d'un nom d'adresse interne et inclusion , dans la définition, d'identifications de polices pour permettre d'accéder auxdites polices stockées ; et, dans l'opération de comparaison, extraction, à partir dudit signal d'activation,desdits noms d'adresses internes et comparaison de ceux-ci avec les noms d'adresses internes dans ladite définition, de sorte qu'on peut employer un même nom d'adresse interne pour spécifier un nombre quelconque de polices stockées pour des présentations de document successives sans modifier lesdits signaux d'activation de police.

4. Système de préparation de document comportant un ordinateur numérique programmé apte à recevoir et à traiter des signaux de données de texte reçues représentant des données non formatées mais incluant des signaux d'indication de format et de composition comportant des signaux de définition de police et des signaux d'activation de police ;

ledit ordinateur possédant des moyens de mémoire de données pour stocker des représentations électriques des polices à utiliser dans l'une quelconque d'une pluralité de présentations de document, et chaque police étant adressable par l'intermédiaire d'un nom de police externe ;

ledit ordinateur comprenant également un espace de mémoire de données pour stocker des marques de programme et lesdits signaux d'indication reçus qui activent ledit ordinateur pour recevoir et traiter les signaux de données de texte reçues ;

des moyens pour recevoir lesdits signaux de définition et d'activation de police, pouvant chacun inclure une pluralité de signaux de paramètre d'identification de police et de nom de police ;

des premiers moyens de programme dans lesdites marques de programme pour activer ledit ordinateur afin de répondre auxdits signaux de définition de police incorporés dans ledit flux de données de texte reçues,de manière à stocker,dans ledit espace de mémoire de données, un nom de police interne lié à un nom de police externe, ledit nom de police externe activant le dit ordinateur pour accéder à des représentations prédéterminées parmi lesdites représentations électriques de police stockées dans lesdits moyens de mémoire de données, par l'intermédiaire desdits signaux de définition de police reçus ;

des deuxièmes moyens de programme dans lesdites marques de programme pour activer ledit ordinateur afin de répondre auxdits signaux d'activation de police incorporés dans ledit flux de données de texte reçues, de manière à explorer une liste de dits signaux d'identification de police inclus dans lesdits signaux d'activation de police reçus ;

des troisièmes moyens de programme dans les dites marques de programme pour activer ledit ordinateur afin de comparer lesdits signaux d'identification de police examinés par lesdits deuxièmes moyens de programme dans un ordre d'examen correspondant à l'ordre de stockage desdits signaux de définition de police stockés dans ledit espace de mémoire de données et, en cas de concordance, arrêter l'examen ; et

des quatrièmes moyens de programme dans lesdites marques de programme pour activer ledit ordinateur afin de sélectionner l'identification de police externe liée à ladite police interne donnant ladite concordance, de manière à choisir les représentations électriques stockées correspondant à ladite police externe sélectionnée pour présenter le texte représenté par les données de texte qui suivent ledit signal d'activation de police examiné par lesdits deuxièmes moyens de programme.

5. Système de préparation de document suivant la revendication 4, comprenant en outre des moyens de programme de commande d'exploration stockés dans ledit espace de mémoire de données activant ledit ordinateur numérique programmé, afin d'activer d'abord lesdits deuxièmes moyens de programme de manière à explorer les dits signaux de définition de police stockés ;

des moyens pour recevoir, avec chacun desdits signaux de définition de police, des signaux concernant une police qui indiquent respectivement des caractéristiques ou des noms de police prédéterminés ; et

lors d'une comparaison réussie par lesdits quatrièmes moyens de programme d'un signal particulier parmi lesdits signaux de définition de police, l'activation desdits troisièmes moyens de programme pour permettre audit ordinateur numérique programmé d'examiner lesdits signaux concernant une police dans lesdits signaux de définition de police particuliers, pour une comparaison dudit signal d'activation de police reçu avec l'un quelconque desdits signaux concernant une police dans ledit signal de définition de police et, en cas de concordance entre l'un quelconque desdits signaux concernant une police dans lesdits signaux de définition de police particuliers, l'arrêt de l'exploration pour permettre audit ordinateur numérique programmé d'utiliser lesdits quatrièmes moyens de programme de manière à sélectionner une police conformément audit signal concernant une police concordant,et sinon la poursuite de la dite exploration desdits signaux de définition de police stockés, par l'intermédiaire desdits troisièmes moyens de programme.

6. Méthode mise en oeuvre par machine pour la sélection de polices électroniques à utiliser en association avec la préparation d'un ensemble de signaux graphiques et de texte pour une présentation visuelle nécessitant des caractères et des symboles graphiques ; comprenant les opérations exécutables automatiquement de :

définition d'une hiérarchie de polices électroniques utilisables pour présenter visuellement un texte et des graphiques correspondant aux ensembles reçus de signaux de texte et graphiques, ladite hiérarchie de polices électroniques comprenant une liste de jeux de polices, chaque jeu de police ayant des caractéristiques et des attributs prédéterminés ;

mémorisation électrique d'une pluralité de dits jeux de polices électroniques dont certains correspondront auxdites polices électroniques définies ;

réception d'un ensemble de signaux de texte et graphiques comportant des identifications des polices à utiliser dans la présentation du texte et des graphiques représentés par lesdits signaux reçus ; et

comparaison desdites identifications reçues avec lesdites polices électroniques définies, comportant l'exploration de ladite hiérarchie et la sélection d'une première police définie dans ladite hiérarchie qui correspond à une première identification parmi les dites identifications reçues, comme police électronique à utiliser dans la présentation du texte et des graphiques suivants.

7. Méthode mise en oeuvre par machine suivant la revendication 6, comprenant la réception d'une définition unique parmi lesdites définitions de police pour un ensemble donné de signaux de texte et graphiques, comportant une pluralité de noms de police dans ladite définition de police unique et listant les noms de police dans un ordre donné ;

la réception d'un signal d'identification de police indiquant ladite identification de police unique; et

après ladite opération de comparaison de la revendication 6, l'exploration de ladite liste dans ledit ordre donné et la comparaison des noms de police de la dite liste avec les noms de police correspondants desdits jeux de polices électroniques stockés, et la sélection d'un premier desdits noms de police correspondants qui concordent avec lesdits noms de police de la liste comme jeu de police à utiliser avec les signaux de texte et graphique suivants.

8. Méthode mise en oeuvre par machine suivant la revendication 6, comprenant la réception d'une pluralité de dites définitions de police pour un ensemble donné de signaux de texte et graphiques, chaque définition de police reçue incluant au moins un nom de police et des signaux d'identification concernant une police prédéterminés, et le stockage desdites définitions de police reçues,dans un ordre de listage prédéterminé ;

la réception d'un signal d'identification de police pour identifier une police à utiliser avec des signaux de texte et des signaux graphiques suivants, le signal d'identification de police reçu comprenant un signal d'identification concernant une police ; et

la comparaison dudit signal d'identification concernant une police reçu, dans l'ordre prédéterminé de listage, avec lesdites définitions de police reçues et la sélection du nom de police d'une première définition de police dans ladite liste ayant un signal d'identification concernant une police qui correspond au signal d'identification concernant une polie reçu avec ledit signal d'identification de police.

9. Méthode mise en oeuvre par machine suivant la revendication 6, dans laquelle une pluralité de divers dispositifs de présentation de document peuvent recevoir et présenter lesdits signaux de texte et signaux graphiques conformément à diverses polices correspondantes parmi lesdites polices choisies ;

comprenant en outre la définition desdites polices électroniques conformément auxdites diverses polices correspondantes parmi lesdites polices choisies, et le stockage seulement des polices qui sont lesdites diverses polices correspondantes parmi lesdites polices choisies, de sorte que le formatage et la sélection des polices dépendent de ceux desdits divers dispositifs de présentation de document qui doivent recevoir lesdits signaux de texte et graphiques, la composition des signaux de texte et graphiques tendant ainsi à être indépendante des dispositifs de présentation.

10. Méthode mise en oeuvre par machine suivant la revendication 9, dans laquelle une desdites identifications reçues comprend une pluralité d'identifications desdites diverses polices correspondantes parmi lesdites polices choisies, de sorte qu'une identification reçue unique permet la sélection d'une quelconque d'une pluralité de dites diverses polices correspondantes parmi lesdites polices choisies.

**Ansprüche**

1. Maschinenimplementiertes Verfahren zum Koppeln eines nichtformatierten Textdatenstromes mit einer Einrichtung zur Dokumentardarstellung, bei welchem die Einrichtung zur Dokumentdarstellung elektrische Darstellungen von beim Darstellen eines durch den Textdatenstrom repräsentierten Dokumentes zu verwendende Schriftarten speichert, welches die Schritte umfaßt:

Festlegen einer Mehrzahl von Schriftarten bei dem Koppeln, die Schriftarten einschließen, die einer der Einrichtungen zur Dokumentendarstellung zueigen sind, wobei jede der Festlegungen durch einen gegebenen Namen adressierbar ist,

Empfangen eines Textdatenstromes, der eingebettete Schriftartaktivierungssignale aufweist, die ei ne Mehrzahl von Schriftarten in einer vorbestimmten Ordnung spezifizieren (Schriftartspezifikationen),

Abfragen der Mehrzahl von Schriftartspezifikationen in dem empfangenen Textdatenstrom in einer gegebenen Ordnung und Vergleichen jeder der abgefragten Spezifikationen mit den festgelegten Schriftarten in der Abfrageordnung und

Auswählen der ersten der spezifizierten Schriftarten, die sich mit irgendeiner der festgelegten Schriftarten wie eine Schriftart vergleichen läßt, die in der Darstellung des empfangenen Textdatenstromes verwendet werden soll.

2. Maschinenimplementiertes Verfahren nach Anspruch 1, bei welchem der empfangene Textdatenstrom eine Mehrzahl der Schriftartaktivierungssignale in darin beabstandeten Stellen aufweist, sodaß Textdaten, welche auf die jeweiligen Aktivierungssignale folgen, mit der Schriftart dargestellt werden, die gemäß den Schritten nach Anspruch 1 ausgewählt wird und ferner die festgelegten Schriftarten für eine gegebene, zu verwendende Einrichtung zur Dokumentdarstellung ausgewählt werden und für jede nachfolgende Dokumentdarstellung die Schriftartfestlegung für die Einrichtungen zur Dokumentdarstellung ohne eine Änderung der Aktivierungssignale ausgewählt werden.

3. Maschinenimplementiertes Verfahren nach Anspruch 1, hei welchem das Verfahren in einem programmierten Digitalrechner durchgeführt wird, wobei der Rechner einen Datenspeicher zum Speichern der elektrischen Darstellungen der Schriftarten auf eine adressierbare Weise aufweist, das ferner Schritte umfaßt:

Auswählen eines internen Adressennamens für die Schriftartfestlegungen und Einschließen von Identifizierungen von Schriftarten in der Festlegung, um ein Zugreifen auf die gespeicherten Schriftarten zu ermöglichen,

Heranziehen der internen Adressennamen von dem Aktivierungssignal und ihr Vergleichen mit den internen Adressennamen in der Festlegung in dem Vergleicher-Schritt, wodurch ein interner Adressenname verwendet werden kann, um irgendeine Anzahl gespeicherter Schriftarten für aufeinanderfolgende Dokumentdarstellungen ohne eine Änderung der Schriftartaktivierungssignale zu spezifizieren.

4. Dokumentvorbereitungssystem mit einem programmierten Digitalrechner, der eingerichtet ist, Textdatensignale zu empfangen und die empfangenen zu verarbeiten, die nicht-formatierte Daten repräsentieren, jedoch format- und zusammensetzunganzeigende Signale mit einer Schriftartfestlegung und Schriftartaktivierungssignale einschließen, wobei

der Recnher einen Datenspeicher zum Speichern elektrischer Darstellungen von Schriftarten aufweist, die in irgendeiner einer Anzahl von Dokumentdarstellungen verwendet werden sollen und jede Schriftart über einen externen Schriftartnamen adressierbar ist,

der Rechner auch einen Datenspeicherraum zum Speichern von Programmkennzeichen und den empfangenen Anzeigesignalen aufweist, welche dem Rechner ermöglichen, Textdatensignale zu empfangen und die empfangenen zu verarbeiten,

mit Mitteln zum Empfangen der Schriftartfestlegungs- und Aktivierungssignale, wobei jedes eine Mehrzahl von Schriftart-Identifizierungsparameter-und Schriftartnamen-Signale enthalten kann,

mit einem ersten Programmittel in den Programmkennzeichen, um dem Rechner zu ermöglichen, auf die Schriftartfestlegungssignale zu antworten, die in dem empfangenen Textdatenstrom zum Speichern eines mit einem externen Schriftartnamen verbundenen internen Schriftartnamens in den Datenspeicherraum eingebettet sind, wobei der externe Schriftartname dem Rechner ermöglicht, auf Vorbestimmte der elektrischen Schriftartdarsellungen zuzugreifen, die in dem Datenspeicher über die empfangenen Schriftartfestlegungssignale gespeichert sind,

mit einem zweiten Programmittel in den Programmkennzeichen, um dem Rechner zu ermöglichen, auf die Schriftartaktivierungssignale zu antworten, die in dem empfangenen Textdatenstrom eingebettet sind, zum Abfragen einer Liste der Schriftart-Identifizierungssignale, die in den empfangenen Schriftartaktivierungssignalen enthalten sind,

mit einem dritten Programmittel in den Programmkennzeichen, um dem Rechner zu ermöglichen, die Schriftart-Identifizierungssignale zu vergleichen, die durch das zweite Programmittel in einer Abfrageordnung abgefragt werden, welche der Ordnung des Speicherns der Schriftartfestlegungssignale entspricht, die in dem Datenspeicherraum gespeichert werden und um nach einem günstigen Vergleich das Abfragen anzuhalten und

mit einem vierten Programmittel in den Programmkennzeichen, um dem Rechner zu ermöglichen, die mit der internen Schriftart verbundene externe Schriftart-Identifizierung auszuwählen, wodurch sich der günstige Vergleich zum Auswählen der gespei cherten elektrischen Darstellungen ergibt, welche der ausgewählten externen Schriftart zum Darstellen eines Textes entsprechen, der durch Textdaten repräsentiert wird, die auf das Schriftartaktivierungssignal folgen, das durch das zweite Programmittel abgefragt wird.

5. Dokumentvorbereitungssystem nach Anspruch 4, das ferner aufweist: ein Abfragesteuerungs-Programmittel , das in dem Datenspeicherraum gespeichert ist, wodurch es dem programmierten Digitalrechner ermöglicht ist, zuerst das zweite Programmittel zu aktivieren, um die gespeicherten Schriftartfestlegungssignale abzufragen,

Mittel zum Empfangen schriftartbezogener Signale, die jeweils vorbestimmte Schriftartkennzeichen oder Namen anzeigen, mit jedem der Schriftartfestlegungssignale und

nach einem Vergleich eines gegebenen der Schriftartfestlegungssignale mittels des vierten Programmittels, zum Aktivieren des dritten Programmittels, um dem programmierten Digitalrechner zu ermöglichen, die schriftartbezogenen Signale in den gegebenen Schriftartfestlegungssignalen zu einem Vergleich des empfangenen Schriftartaktivierungssignales mit irgendeinem der schriftartbezogenen Signale in dem Schriftartfestlegungssignal abzufragen und nach einem günstigen Vergleich zwischen irgendeinem der schriftartbezogenen Signale in den gegebenen Schriftartfestlegungssignalen das Abfragen anzuhalten, um dem programmierten Digitalrechner zu ermöglichen, das vierte Programmittel zum Auswählen einer Schriftart gemäß dem verglichenen schriftartbezogenen Signal zu verwenden, andernfalls das Abfragen der gespeicherten Schriftartfestlegungssignale unter Verwendung des dritten Programmittels fortzusetzen.

6. Maschinenimplementiertes Verfahren zum Auswählen elektronischer Schriftarten, die in Verbindung mit der Vorbereitung eines Satzes von Text- und graphischen Signalen zur visuellen Darstellung, die eine Zeichengraphik erfordert, verwendet werden sollen, das die folgenden automatisch ausführbaren Schritte umfaßt:

Festlegen einer Hierarchie elektronischer Schriftarten, die zur visuellen Darstellung eines Textes und einer Graphik entsprechend empfangener Sätzen von Text- und Graphiksignalen verwendet werden können, wobei die Hierarchie elektronischer Schriftarten eine Listen von Schriftartsätzen aufweist, wobei jeder Schriftartsatz vorbestimmte Kennzeichen und Merkmale besitzt,

elektronisches Speichern einer Mehrzahl elektronischer Schriftartsätze, von denen einige den festgelegten elektronischen Schriftarten entsprechen werden,

Empfangen eines Satzes von Text- und graphischen Signalen mit Identifizierungen von Schriftarten, die beim Darstellen des Textes und der Graphik verwendet werden sollen, die durch die empfangenen Signale repräsentiert werden und Vergleichen der empfangenen Identifizierungen mit den festgelegten elektronischen Schriftarten mit Abfragen der Hierarchie und Auswählen einer ersten festgelegten Schriftart in der Hierarchie, die einer ersten der empfangenen Schriftartidentifizierungen wie die elektronische Schriftart entspricht, die beim Darstellen eines nachfolgenden Textes und einer Graphik verwendet werden soll.

7. Maschinenimplementiertes Verfahren nach Anspruch 6, welches umfaßt: Empfangen einer einzigen der Schriftartfestlegungen für einen gegebenen Satz von Text- und Graphiksignalen, Einschließen einer Mehrzahl von Schriftartnamen in der einzigen Schriftartfestlegung und Auflisten der Schriftartnamen in einer gegebenen Ordnung,

Empfangen eines Schriftart-Identifizierungssignales, das die einzige Schriftartidentifizierung anzeigt und nach dem vergleichenden Schritt nach Anspruch 6, Abfragen der Auflistung in der gegebenen Ordnung und Vergleichen der auflistenden Schriftartnamen mit entsprechenden Schriftartnamen der gespeicherten, elektronischen Schriftartsätze und Auswählen eines ersten der entsprechenden Schriftartnamen, der sich mit den auflistenden Schriftartnamen günstig, wie der Schriftartsatz vergleicht, der mit nachfolgenden Text- und Graphiksignalen verwendet werden soll.

8. Maschinenimplimentiertes Verfahren nach Anspruch 6, welches beinhaltet: Empfangen einer Mehrzahl der Schriftartfestlegungen für einen gegebenen Satz von Text- und Graphiksignalen, wobei jede empfangene Schriftartfestlegung zumindest einen Schriftartnamen und vorbestimmte schriftartbezogene Identifizierungssignale aufweist, Speichern der empfangenen Schriftartfestlegungen in einer vorbestimmten Ordnung des Auflistens,

Empfangen eines Schriftart-Identifizierungssignales zum Identifizieren einer Schriftart, die mit nachfolgenden Text- und Graphiksignalen verwendet werden soll, wobei das empfangene Schriftart-Identifizierungssignal ein schriftartbezogenes Identifizierungssignal enthält und

Vergleichen des empfangenen schriftartbezogenen Identifizierungssignal in der Reihenfolge der vorbestimmten Ordnung des Auflistens mit den empfangenen Schriftartfestlegungen und Auswählen des Schriftartnamens einer ersten Schriftartfestlegung in der Auflistung mit einem schriftartbezogenen Identifizierungssignal, welches dem schriftartbezogenen Identifizierungssignal entspricht, das mit dem Schriftart-Identifizierungssignal empfangen wird.

9. Maschinenimplementiertes Verfahren nach Anspruch 6, hei welchem ei ne Mehrzahl verschiedener Einrichtungen zur Dokumentdarstellung die Text- und Graphiksignale in Einklang mit entsprechenden Verschiedenen der ausgewählten Schriftarten empfangen und darstellen kann, das ferner das Festlegen der elektronischen Schriftarten in Einklang mit den entsprechenden Verschiedenen der ausgewählten Schriftarten und das Speichern nur jener Schriftarten beinhaltet, welche die entsprechenden Verschiedenen der ausgewählten Schriftarten sind, sodaß das Formatieren und Auswählen von Schriftarten davon abhängig ist, welche der verschiedenen Einrichten zur Dokumentdarstellung die Text- und Graphiksignale empfangen sollen, wodurch die Zusammensetzung der Text- und Graphiksignale dazu tendiert, von den Darstellungseinrichtungen unabhängig zu sein.

10. Maschinenimplementiertes Verfahren nach Anspruch 9, bei welchem eine der empfangenen Identifizierungen eine Mehrzahl von Identifizierungen der entsprechenden Verschiedenen der ausgewählten Schriftarten einschließt, sodaß eine einzige empfangene Identifizierung die Auswahl irgendeiner einer Mehrzahl der entsprechenden Verschiedenen der ausgewählten Schriftarten ermöglicht.

*Fig-1*

10

14

13

12

APGM 20

JES 21

FORMATTER 22

LIB FONT 24

23

PRINT 25

OTHER 19

DASD 15

33

ALL POINTS PRINTER 30

31

CONTROLS 32

*Fig-2*

| CREATE TEXT 40 | → | EDIT TEXT 41 | → | MARK FORMAT 42 | → | FORMAT DOCUMENT | → | PRINTER OR DISPLAY 43 |

44

| MARGINS 51 | | |
| INDENT 52 | FORMAT CONTROL 50 | ⋮ 60 |
| REF. NOS: 53 | | 59 |
| LINE FORMAT 54 | 55 56 57 | HEADINGS & FOOTINGS |

| LINE SPACE | FP | FONT 58 | COLUMNS |

*Fig-3*

*Fig-4*

x,y

77

78

BODY (70)

| HEADING SPACE | 67 |
| TITLE | 68 |
| RUNNING HEADER | 69 |
| SECTION | 71 |
| SECTION | |
| ⋮ | 72 |
| SECTION | |
| FOOTNOTE | 73 |
| RUNNING FOOT | 74 |
| TITLE | 75 |
| FOOTING SPACE | 76 |
| MARGIN | 65 |

66

LOGICAL PAGE

## Fig. 5

CODE
PAGE

CODED
DATA

| CP | CID |

85  86

84

STORED
RASTER
PATTERNS
(GRAPHICS)

OPTICAL
DISKS

FONT
OBJECT

| CONTR | PAT |
89  90

88

87

| NAME | P POINTER | G POINTER |

81  82  83

80

| 130 | NEFI POINTER | FONT ID | 131 |
|-----|-----|-----|-----|
| 132 | WT POINTER | FLAGS | 133 |
| 134 | PITCH | SIZE | BLANK WIDTH | 138 |
| 137 | TRC | 135 | FIGURE WIDTH | 139 |
| 140 | 148 | POINT SIZE | 146 |
| 145 | TYPEFACE | ATTRIBUTES | 149 |
| 147 | WEIGHT | WIDTH | DESCENDER MAX | 151 |
| 150 | ASCENDER MAX | WORDSPACE | 153 |
| 156 | CODE PAGE ID | LINESPACE | 155 |
| 158 | CODE FONT NAME | FONT OBJECT ID | 157 |

LINE
PRINTER
EFI
101

APA
EFI
102

| 110 | NFTB POINTER | FTB LENGTH | 111 |
|-----|-----|-----|-----|
| 112 | FONT NAME | OBJECT POINTER | 113 |
| 114 | EFI POINTER | FONT TYPE | 115 |
| 116 | CONTROL FLAG | OSC | REPEAT | 117 |
| 118 | CODE PAGE ID | TYPEFACE | 120 |
| 121 | POINT SIZE | WEIGHT | 122 |
| 123 | WIDTH | ATTRIBUTES | 124 |
| 125 | FONT ID | | |

100

| 174 | EFIP |
|-----|-----|
| 175 | FTBP |
| 176 | FCURR |
| 177 | ECURR |
| 178 | INDEX P |
| 179 | ORIENTATION |

| 163 | RESOLUTION | TYPEFACE NAME | 161 |
|-----|-----|-----|-----|
| 164 | ORIENTATION | INDEX ENTRY LENGTH | 165 |
| 167 | POINT SIZE | WEIGHT | 166 |
| 168 | WIDTH | ATTRIBUTES | |
| | FONT OBJECT NAME | | 169 |

ENTRY

FONT
INDEX

(PLURAL ENTRIES)

160  103

## Fig. 6

22

_Fig - 7_

FIG. 8

Fig. 9

Fig. 10

$$\mathbf{FIG-11}$$